# EUROPEAN PATENT SPECIFICATION

(11) **EP 1 554 962 B1**
(45) Date of publication and mention of the grant of the patent: **04.07.2007**
(21) Application number: 04425015.7
(22) Date of filing: 16.01.2004
(51) Int. Cl.: A47J 43/25

(54) **A container-grater for friable food product**
Behälter mit Reibe für zerreibbare Nahrungsmittel
Récipient avec appareil à raper pour produit alimentaire friable

(43) Date of publication of application: 20.07.2005
(73) Proprietor: Bisio Progetti S.p.A, 15100 Alessandria (IT)
(72) Inventor: Bisio Stefano, 15100 Alessandria (IT)
(74) Representative: Gerbino, Angelo

(56) References cited:
- GB-A- 349 346
- NL-C- 85 047
- US-A- 3 495 640
- US-A- 4 588 136
- US-B1- 6 412 717

## Description

The present invention relates to a container-grater for a friable food product such as, for example, hard cheese.

An article of this type performs both the function of a packaging for the food product, isolating it from the outside environment during transportation and storage at the point of sale and by the customer, and the function of a grater at the time of consumption.

Known models of a container-grater of this type comprise:
- a base on which an inverted cup-shaped element having a polygonal cross-section is mounted rotatably so as to define a chamber for containing the food product, the base including a grating plate which constitutes the bottom of the chamber and has a plurality of through-holes with the edges of which respective teeth that project into the chamber are associated,
- a threaded rod which extends upwards from the grating plate into the chamber, and
- a pressure plate having a central, threaded hole which is engaged by the threaded rod and an outer perimeter suitable for engaging with the internal wall of the inverted cup-shaped element in a manner such that rotation of the inverted cup-shaped element relative to the base brings about translation of the pressure plate along the rod and compression of the food product against the plate so that the food product is broken up and dispensed from the containing chamber. A container-grater of this type is disclosed in US 6412717B.

In particular, during grating, the teeth of the plate perform a circular movement relative to the piece of cheese which, since it is clamped inside the containing chamber, is cut into at the bottom in its circular portions which face the path of each tooth and is thus broken up and dispensed. In contrast with graters which are not associated with containers for the food product, the cutting operation takes place in a predetermined manner which cannot be varied by the user; this may require the user to exert considerable force which may be burdensome.

The object of the present invention is to provide a container-grater for a friable food product the operation of which requires little effort by the user, at the same time enabling a grated product of satisfactory appearance to be obtained.

According to the invention, this object is achieved by virtue of a container-grater and of the respective grating plate which have the characteristics specified in the appended claims.

Advantages and characteristics of the present invention will become clear from the following detailed description which is provided by way of non-limiting example with reference to the appended drawings, in which:
Figure 1 is an exploded, elevational view of a container-grater of the invention,
Figure 2 is an elevational view of the container-grater of Figure 1 in the assembled configuration,
Figure 3 is a plan view of the container-grater of the preceding drawings, from above,
Figure 4 is a plan view from above of a grating plate forming part of the container-grater of the preceding drawings,
Figure 5 is an elevational view of a tooth of the plate of Figure 4, from the rear,
Figure 6 is a plan view of the tooth of Figure 5, from above
Figure 7 is a section taken on the line VII-VII of Figure 4,
Figures 8 and 9 are perspective views of respective portions of the plate of Figure 4, and
Figure 10 is a section through a detail of Figure 2, on an enlarged scale.

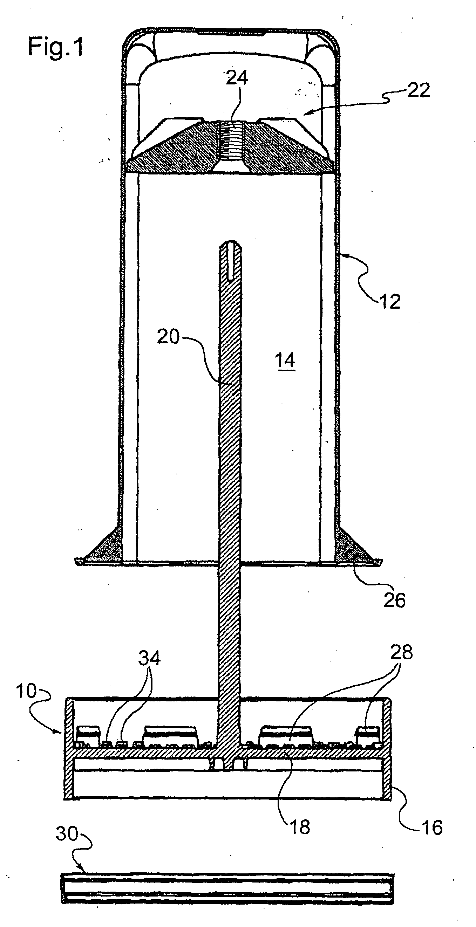

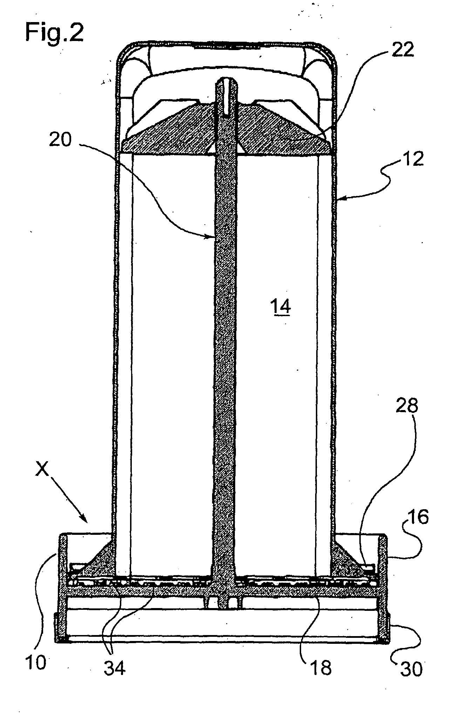

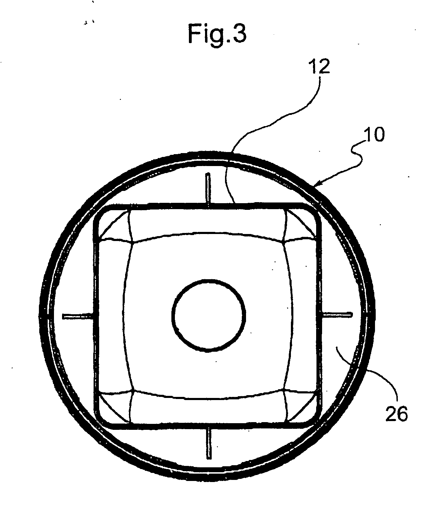

A container-grater for a friable food product, in particular, a piece of hard cheese, comprises (Figures 1-3) a base 10 on which an inverted cup-shaped element 12 having a polygonal, in particular square, cross-section is mounted rotatably so as to define a chamber 14 for containing the cheese.

The base 10 comprises a circular sleeve 16 inside which a circular grating plate 18 is fixed transversely and constitutes the bottom of the containing chamber 14.

A threaded rod 20 having an axis parallel to that of the sleeve 16 extends upwards from the centre of the grating plate 18 into the chamber 14. A pressure plate 22 having a square outer perimeter which reproduces the shape of the internal wall of the inverted cup-shaped element 12 is engaged by the threaded rod 20 through a central threaded hole 24.

The inverted cup-shaped element 12 has, in the region of its mouth, a flange 26 having an outer perimeter which reproduces the profile of the internal cross-section of the sleeve 16. The flange 26 is kept associated with the facing surface of the plate 18 by means of projections 28 which protrude radially from the internal wall of the sleeve 16. The lower edge of the sleeve 16 may be closed by a removable cover 30.

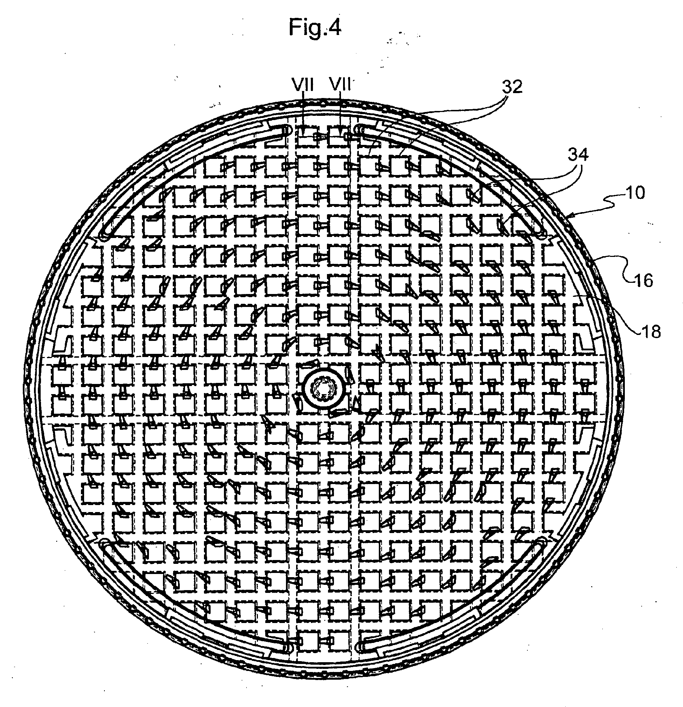

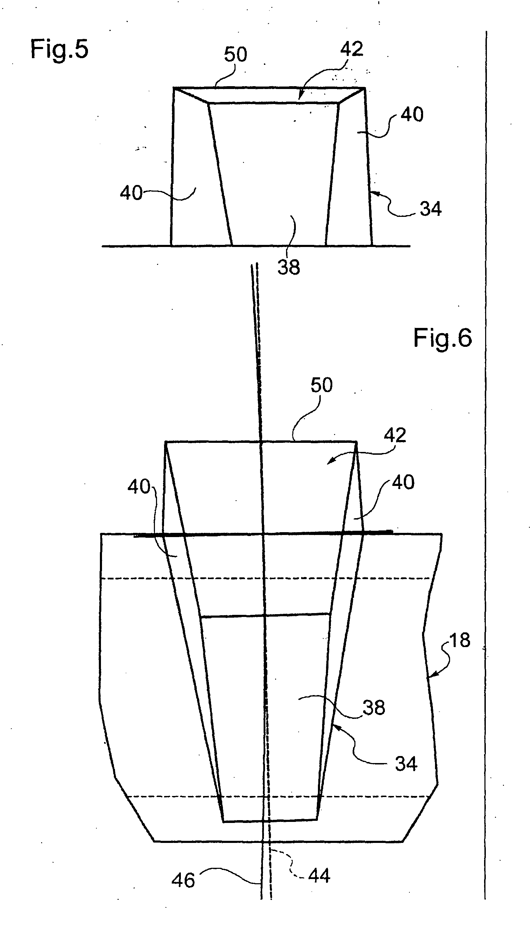

The grating plate 18 has (Figure 4) a plurality of square through-holes 32 which are arranged in a plurality of parallel rows. A respective tooth 34 associated with the edge of each hole 32 protrudes from the side of the plate 18 which faces towards the containing chamber 14 and has (Figures 5-7) a front face 36, a rear face 38, two side faces 40, and an upper face 42. Each tooth 34 also has a longitudinal axial plane 44 oriented substantially (Figure 6) along the tangent to the circle 46 which has the centre of the plate 18 as its centre and which extends through the tooth 34.

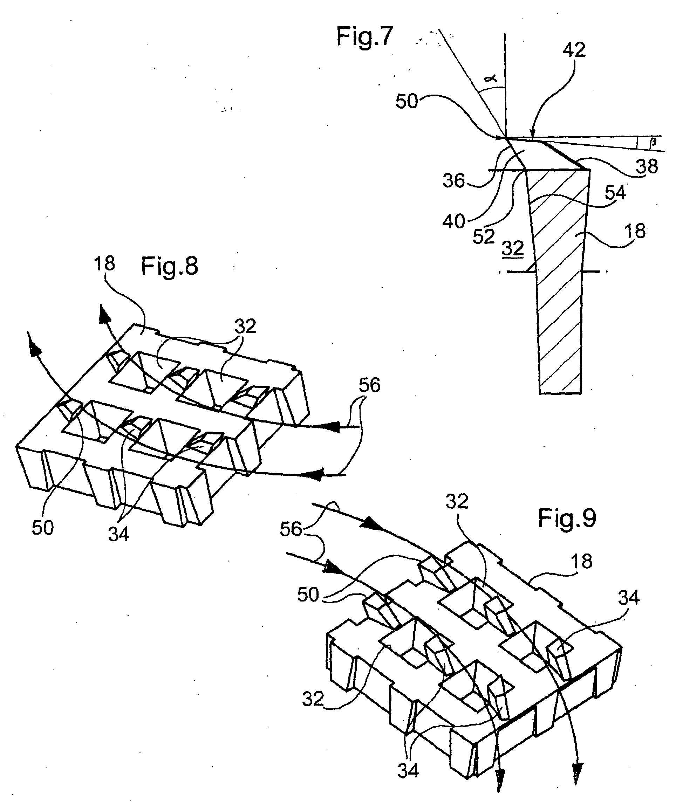

In each tooth 34, the front face 36 is inclined forwards relative to the vertical so that the edge 50 formed by the intersection of the front face 36 with the upper face 42 projects into the free opening of the associated hole 32. Preferably the angle α of inclination of the front face to the vertical is between 0° and 45°. The front face 36 (Figure 7) extends from the edge 52 of the hole 32 the side wall of which has an initial portion 54 which is inclined to the vertical in the same direction as the face 36 but to a less marked extent.

The upper face 42 of each tooth 34 is inclined downwards relative to the horizontal by an angle β of between 0° and 15°. Moreover, the side faces 40 of each tooth 34 draw near the respective axial plane 44, proceeding from the front face 36 towards the rear face 38.

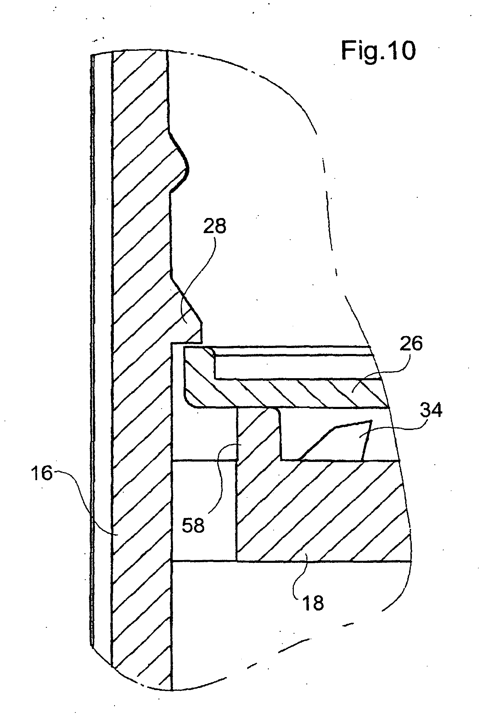

A series of spaced-apart ribs 58 of a height greater than that of the teeth 34 also protrudes upwards (Figure 10) from the periphery of the side of the grating plate 18 which faces towards the containing chamber 14. The flange 26 of the element 12 consequently bears on these ribs 58 and cannot interfere with the teeth 34, in particular during its rotary movement.

During grating, the rotation of the inverted cup-shaped element 12 (to which the piece of cheese is fixed), relative to the base 10, brings about a downward translation of the pressure plate 22 along the rod 20 and the compression of the piece of cheese against the plate 18. The cheese is thus broken up by the teeth 34 into fragments which pass through the holes 32 and fall downwards.

During this operation, the edges 50 projecting into the openings of the associated holes 32 are the first parts of the teeth 34 to come into contact with the cheese and thus act as cutters and are particularly effective in enabling the user to exert a uniform force without too much effort (see in particular Figures 8 and 9 in which the arrows 56 indicate the direction of movement of the cheese). Moreover, since the front faces 36 of the teeth 34 extend from the edge 52 of the associated hole 32, the cut fragments of cheese fall directly into the hole, without being dragged along the surfaces of the plate 18 that are located between one tooth and another before falling into another, subsequent hole 32. This dragging is in fact not desirable since it would lead to an increase in the effort required by the user without bringing any benefit but, on the contrary, reducing the quality of the product obtained.

For their part, the inclinations with which the side faces 40 and the upper faces 42 of the teeth 34 are formed prevent those faces 40, 42 from coming into frictional contact with the cheese cut by the edges 50, causing undesired removal of cheese by abrasion.

At the same time, the inclination of the upper faces 42 to the horizontal is quite small. The faces 42 can consequently provide some support for the piece of cheese, preventing the teeth 34 from penetrating it for their entire depth, which would lead to an increase in the effort exerted by the user for the grating.

Naturally, the principle of the invention remaining the same, the details of construction and the forms of embodiment may vary widely with respect to those described purely by way of example, without thereby departing from its scope as defined in the claims. For example, the grating plate may have substantially any number of holes with substantially any arrangement and geometrical shape as defined in the claims. Moreover, a given hole may not have an associated tooth or may have several associated teeth.

## Claims

1. A container-grater for a friable food product, in particular a hard cheese, comprising:
- a base (10) on which an inverted cup-shaped element (12) having a polygonal cross-section is mounted rotatably so as to define a chamber (14) for containing the food product, the base (10) including a grating plate (18) which constitutes the bottom of the chamber (14) and has a plurality of through-holes (32) with the edges of which respective teeth (34) that project into the chamber (14) are associated,
- a threaded rod (20) which extends upwards from the grating plate (18) into the chamber (14), and
- a pressure plate (22) having a central, threaded hole (24) which is engaged by the threaded rod (20) and an outer perimeter suitable for engaging with the internal wall of the inverted cup-shaped element (12) in a manner such that rotation of the inverted cup-shaped element (12) relative to the base (10) brings about translation of the pressure plate (22) along the rod (20) and compression of the food product against the plate (18) so that the food product is broken up and dispensed from the containing chamber (14),
the container-grater being **characterized in that** at least one of the teeth (34) has an edge (50) projecting into the free opening of the associated hole (32) so as to act as a cutter of the food product, **in that** each tooth (34) has a longitudinal axial plane (44) oriented substantially along the tangent (46) to the circle which has the centre of the grating plate (18) as its centre and which extends through the tooth (34) and **in that** the grating plate (18) has a plurality of holes (32) arranged in a plurality of parallel rows.

2. A container-grater according to Claim 1, **characterized in** each tooth (34) has a front face (36), a rear face (38), two side faces (40), and an upper face (42), the front face (36) being inclined forwards relative to the vertical so that the cutting edge (50) is formed by the intersection of the front face (36) with the upper face (42).

3. A container-grater according to Claim 2, **characterized in that** the angle of inclination (α) of the front face (36) to the vertical is between 0° and 45°.

4. A container-grater according to Claim 2 or Claim 3, **characterized in that** the front face (36) extends from the edge (52) of the respectively associated hole (32).

5. A container-grater according to any one of Claims 2, 3 and 4, **characterized in that** the upper face (42) is inclined downwards relative to the horizontal by an angle (β) of between 0° and 15°.

6. A container-grater according to Claim 1, **characterized in that** both of the side faces (40) of each tooth (34) draw near the said axial plane (44), proceeding from the front face (36) towards the rear face (38).

7. A container-grater according to any one of the preceding claims, **characterized in that** a respective tooth (34) is associated with each hole (32) in the grating plate (18).

8. A grating plate (18) for a container-grater according to any one of the preceding claims, having a plurality of through-holes (32) which are arranged in a plurality of parallel rows and with the edges (50) of which respective projecting teeth (34) are associated, wherein at least one of the teeth (34) has an edge (50) projecting into the free opening of the associated hole (32) and each tooth (34) has a longitudinal axial plane (44) oriented substantially along the tangent (46) to the circle which has the centre of the grating plate (18) as its centre and which extends through the tooth (34).

## Patentansprüche

1. Behälter mit Reibe für ein zerreibbares Nahrungsmittelprodukt, insbesondere einen harten Käse, umfassend:
- ein Fundament (10), auf dem ein umgedrehtes becherförmiges Element (12) mit einem mehreckigen Querschnitt drehbar befestigt ist, um eine Kammer (14) zum Enthalten des Nahrungsmittelprodukts zu definieren, wobei das Fundament (10) eine Reibeplatte (18) umfasst, welche den Boden der Kammer (14) bildet und eine Mehrzahl von Durchgangslöchern (32) aufweist, mit deren Rändern entsprechende, in die Kammer (14) ragende Zacken (34) verbunden sind,
- einen Gewindestab (20), der sich von der Reibeplatte (18) nach oben in die Kammer (14) erstreckt, und
- eine Druckplatte (22), die ein zentrales Gewindeloch (24), in das der Gewindestab (20) eingreift, und einen Außenumfang aufweist, der dafür geeignet ist, mit der Innenwand des umgedrehten becherförmigen Elements (12) solcherart in Eingriff zu kommen, dass die Drehung des umgedrehten becherförmigen Elements (12) in Bezug auf das Fundament (10) eine Verschiebung der Druckplatte (22) entlang des Stabs (20) und ein Drücken des Nahrungsmittelprodukts gegen die Platte (18) bewirkt, so dass das Nahrungsmittelprodukt zerbrochen und von der Behälterkammer (14) ausgegeben wird,
wobei der Behälter mit Reibe **dadurch gekennzeichnet ist, dass** zumindest eine der Zacken (34) einen Rand (50) aufweist, der in die freie Öffnung des dazugehörigen Lochs (32) ragt, um als Zerschneider des Nahrungsmittelprodukts zu wirken, dass jede Zacke (34) eine axiale Längsebene (44) aufweist, die im Wesentlichen entlang der Tangente (46) zum Kreis ausgerichtet ist, deren Mittelpunkt das Zentrum der Reibeplatte (18) ist und die sich durch die Zacke (34) erstreckt, und dass die Reibeplatte (18) eine Mehrzahl von Löchern (32) aufweist, die in einer Mehrzahl von parallelen Reihen angeordnet sind.

2. Behälter mit Reibe gemäß Anspruch 1, **dadurch gekennzeichnet, dass** jede Zacke (34) eine Vorderfläche (36), eine Hinterfläche (38), zwei Seitenflächen (40) und eine obere Fläche (42) aufweist, wobei die Vorderfläche (36) in Bezug auf die Vertikale nach vorne geneigt ist, so dass die Schneidkante (50) durch die Überschneidung der Vorderfläche (36) mit der oberen Fläche (42) gebildet wird.

3. Behälter mit Reibe gemäß Anspruch 2, **dadurch gekennzeichnet, dass** der Neigungswinkel (α) der Vorderfläche (36) zur Vertikalen zwischen 0° und 45° beträgt.

4. Behälter mit Reibe gemäß Anspruch 2 oder Anspruch 3, **dadurch gekennzeichnet, dass** sich die Vorderfläche (36) vom Rand (52) des jeweiligen dazugehörigen Lochs (32) erstreckt.

5. Behälter mit Reibe gemäß einem der Ansprüche 2, 3 und,4, **dadurch gekennzeichnet, dass** die obere Fläche (42) in Bezug auf die Horizontale um einen Winkel (β), der zwischen 0° und 15° beträgt, nach unten geneigt ist.

6. Behälter mit Reibe gemäß Anspruch 1, **dadurch gekennzeichnet, dass** die beiden Seitenflächen (40) jeder Zacke (34) sich der axialen Ebene (44) annähern, und zwar mit einem Verlauf von der Vorderfläche (36) zur Hinterfläche (38).

7. Behälter mit Reibe gemäß einem der vorhergehenden Ansprüche, **dadurch gekennzeichnet, dass** jedem Loch (32) in der Reibeplatte (18) eine entsprechende Zacke (34) zugeordnet ist.

8. Reibeplatte (18) für einen Behälter mit Reibe gemäß einem der vorhergehenden Ansprüche, welche eine Mehrzahl von Durchgangslöchern (32) aufweist, die in einer Mehrzahl von parallelen Reihen angeordnet sind und deren Rändern (50) entsprechende vorspringende Zacken (34) zugeordnet sind, wobei zumindest eine der Zacken (34) einen Rand (50) aufweist, der in die freie Öffnung des dazugehörigen Lochs (32) ragt, und jede Zacke (34) eine axiale Längsebene (44) aufweist, die im Wesentlichen entlang der Tangente (46) zum Kreis ausgerichtet ist, deren Mittelpunkt das Zentrum der Reibeplatte (18) ist und die sich durch die Zacke (34) erstreckt.

## Revendications

1. Récipient avec appareil à râper pour un produit alimentaire friable, en particulier du fromage dur, comprenant:
- une base (10) sur laquelle un élément en forme de coupe renversée (12) ayant une section transversale polygonale est monté de façon rotative de façon à définir une chambre (14) pour contenir le produit alimentaire, la base (10) comprenant une plaque à râper (18) qui constitue le fond de la chambre (14) et possède une pluralité de trous de passage (32) avec les bords desquels des dents respectives (34) qui se projettent dans la chambre (14) sont associées,
- une tige filetée (20), qui s'étend vers le haut depuis la plaque à râper (18) jusque dans la chambre (14), et
- une plaque de pression (22) possédant un trou fileté central (24) qui est engagé par la tige filetée (20) et un périmètre extérieur adapté pour s'engager avec la paroi interne de l'élément en forme de coupe renversée (12) d'une manière telle que la rotation de l'élément en forme de coupe renversée (12) par rapport à la base (10) produise la translation de la plaque de pression (22) le long de la tige (20) et la compression du produit alimentaire contre la plaque (18) afin que le produit alimentaire soit brisé et distribué à partir de la chambre faisant récipient (14),
le récipient avec appareil à râper étant **caractérisé en ce qu'**au moins une des dents (34) possède un bord (50) se projetant dans l'ouverture libre du trou associé (32) de façon à agir comme pièce de découpage du produit alimentaire, **en ce que** chaque dent (34) possède un plan axial longitudinal (44) orienté sensiblement le long de la tangente (46) au cercle qui a le centre de la plaque de râpage (18) comme centre et qui s'étend à travers la dent (34) et **en ce que** la plaque à râper (18) possède une pluralité de trous (32) agencés en une pluralité de rangées parallèles.

2. Récipient avec appareil à râper selon la revendication 1, **caractérisé en ce que** chaque dent (34) possède une face avant (36), une face arrière (38), deux faces latérales (40) et une face supérieure (42), la face avant (36) étant inclinée vers l'avant par rapport à la verticale de telle sorte que le bord coupant (50) soit formé par l'intersection de la face avant (36) avec la face supérieure (42).

3. Récipient avec appareil à râper selon la revendication 2, **caractérisé en ce que** l'angle d'inclinaison (α) de la face avant (36) par rapport à la verticale est situé entre 0° et 45°.

4. Récipient avec appareil à râper selon la revendication 2 ou la revendication 3, **caractérisé en ce que** la face avant (36) s'étend depuis le bord (52) du trou respectivement associé (32).

5. Récipient avec appareil à râper selon l'une quelconque des revendications 2, 3 et 4, **caractérisé en ce que** la face supérieure (42) est inclinée vers le bas par rapport à l'horizontale d'un angle (β) situé entre 0° et 15°.

6. Récipient avec appareil à râper selon la revendication 1, **caractérisé en ce que** les deux faces latérales (40) de chaque dent (34) se rapprochent dudit plan axial (44) lorsque l'on passe de la face avant (36) à la face arrière (38).

7. Récipient avec appareil à râper selon l'une quelconque des revendications précédentes, **caractérisé en ce qu'**une dent respective (34) est associée à chaque trou (32) de la plaque à râper (18).

8. Plaque à râper (18) pour un récipient avec appareil à râper selon l'une quelconque des revendications précédentes, possédant une pluralité de trous de passage (32) qui sont agencés en une pluralité de rangées parallèles et avec les bords (50) desquels les dents en saillie respectives (34) sont associées, dans laquelle au moins une des dents (34) possède un bord (50) se projetant dans l'ouverture libre du trou associé (32) et chaque dent (34) possède un plan axial longitudinal (44) orienté sensiblement le long de la tangente (46) au cercle qui a le centre de la plaque à râper (18) comme centre et qui s'étend à travers la dent (34).
